# EUROPEAN PATENT APPLICATION

(11) **EP 4 546 855 A1**
(43) Date of publication of application: **30.04.2025**
(21) Application number: 23851690.0
(22) Date of filing: 03.08.2023
(51) Int. Cl.: H04W 24/08

(54) **MEASUREMENT PARAMETER FEEDBACK METHOD AND DEVICE, TERMINAL, AND STORAGE MEDIUM**

(30) Priority: 12.08.2022 CN 202210968533
(71) Applicant: ZTE CORPORATION, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); ZHENG, Guozeng, Shenzhen, Guangdong 518057 (CN); LI, Yong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/111058
(87) International publication number: WO 2024/032469

(57) **Abstract**

The present application relates to the field of communications, and discloses a measurement parameter feedback method and device, a terminal, and a storage medium. The method comprises: receiving first signaling and a measurement resource; determining a measurement type according to time information related to the first signaling; determining a measurement parameter according to the measurement resource and the measurement type; and feeding back the measurement parameter.

## Description

### CROSS-REFERENCE TO RELATED APPLICATIONS

This application claims priority to a Chinese patent application filed with the China Patent Office on August 12, 2022, with application number 202210968533.3, entitled "MEASUREMENT PARAMETER FEEDBACK METHOD AND DEVICE, TERMINAL, AND STORAGE MEDIUM", the content of which is incorporated herein by reference.

### TECHNICAL FIELD

The present application relates to the field of communications, in particular relates to a feedback method for measurement parameter, a device, a terminal and a storage medium.

### BACKGROUND

In order to improve the performance of wireless communication systems, multi-antenna technology is widely used in wireless communication systems. Multi-antenna technology includes but not limited to multiple-input-multiple-output (MIMO), multi-transmission node joint transmission (JT), etc. However, to obtain the performance of multi-antenna technology, base station needs to determine relatively accurate measurement parameters, such as channel state information (CSI), and the accurate measurement parameters are associated with the measurement type adopted by the terminal. Therefore, in some cases, for example when the measurement type adopted by the terminal is updated, the base station cannot determine the accurate measurement parameters in time.

### SUMMARY

The embodiments of the present application provide a feedback method for measurement parameter, device, terminal and storage medium, which can more accurately feedback the measurement parameters to the base station.

In a first aspect, a feedback method for measurement parameter is provided, the feedback method comprises: receiving first signaling and a measurement resource; determining a measurement type according to time information related to the first signaling; determining a measurement parameter according to measurement resource and the measurement type; feeding back the measurement parameter.

In a second aspect, a feedback device for measurement parameter is provided, the feedback device comprises: a first reception module, for receiving a first signaling and a measurement resource; a first determination module, for determining a measurement type according to time information related to the first signaling; a second determination module, for determining a measurement parameter according to measurement resource and the measurement type; a feedback module, for feeding back the measurement parameter.

In a third aspect, a terminal is provided, the terminal comprising a processor and a memory, the memory stores a program or instruction that can be run on the processor, and when executed by the processor, causing the processor to implement the steps of the feedback method recited in the first aspect.

In a fourth aspect, a reception method for measurement parameter is provided, the reception method comprises: sending first signaling and a measurement resource; receiving a measurement parameter, wherein the measurement parameter is determined according to the measurement resource and a measurement type, and the measurement type is determined according to time information related to the first signaling.

In a fifth aspect, a reception device for measurement parameter is provided, the reception device comprises: a sending module, for sending first signaling and a measurement resource; a second reception module, for receiving a measurement parameter, wherein the measurement parameter is determined according to the measurement resource and a measurement type, and the measurement type is determined according to time information related to the first signaling.

In a sixth aspect, a readable storage medium is provided, the readable storage medium stores a program or instruction, and when executed by the processor, causing the processor to implement the steps of the method recited in the first aspect or in the fourth aspect.

In a seventh aspect, a chip is provided, the chip comprising a processor and a communication interface, the communication interface is coupled to the processor, and the processor is used to run a program or instruction to implement the steps of the method recited in the first aspect or in the fourth aspect.

In an eighth aspect, a computer program/program product is provided, the computer program/program product is stored in a storage medium and is executed by at least one processor to implement the steps of the method recited in the first aspect or in the fourth aspect.

### BRIEF DESCRIPTION OF DRAWINGS

FIG. 1 is a schematic diagram of a wireless communication system to which an embodiment of the present application may be applied;
FIG. 2 is a schematic flowchart of a feedback method for measurement parameter according to an embodiment of the present application;
FIG. 3 is a schematic diagram of a feedback method for measurement parameter according to an embodiment of the present application;
FIG. 4 is a schematic diagram of a structure of a feedback device for measurement parameters according to an embodiment of the present application;
FIG. 5 is a schematic flowchart of a reception method for measurement parameters according to another embodiment of the present application;
FIG. 6 is a schematic diagram of a structure of a terminal according to an embodiment;
FIG. 7 is a schematic diagram of a structure of a reception device for measurement parameters according to an embodiment of the present application;
FIG. 8 is a schematic diagram of a structure of a network side device according to an embodiment.

### DETAILED DESCRIPTION

The following will be combined with the drawings in the embodiments of the present application to clearly describe the technical solutions in the embodiments of the present application. Obviously, the described embodiments are part of the embodiments of the present application, rather than all the embodiments. Based on the embodiments in the present application, all other embodiments obtained by those skilled in the art belong to the scope of protection of the present application.

The terms "first", "second", etc. in the specification and claims of the present application are used to distinguish similar objects, which are not used to describe a specific order or sequence. It should be understood that the terms used in this way are interchangeable under appropriate circumstances, so that the embodiments of the present application can be implemented in an order other than those illustrated or described here, and the objects distinguished by "first" and "second" are generally of the same type, and the number of objects is not limited, for example, the first object can be one or more. In addition, "and/or" in the specification and claims represents at least one of the connected objects, and the character "/" generally represents that the previous and next associated objects are in an "or" relationship.

It should be noted that the technology described in the embodiments of the present application is not limited to the Long Term Evolution (LTE)/LTE-Advanced (LTE-A) system, but can also be used in other wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA) and other systems. The terms "system" and "network" in the embodiments of the present application are often used interchangeably, and the described technology can be used for the above-mentioned systems and radio technologies as well as other systems and radio technologies. The following description describes a New Radio (NR) system for illustrative purposes, and NR terms are used in most of the following descriptions, but these technologies can also be applied to applications other than NR system applications, such as the 6^{th} Generation (6G) communication system.

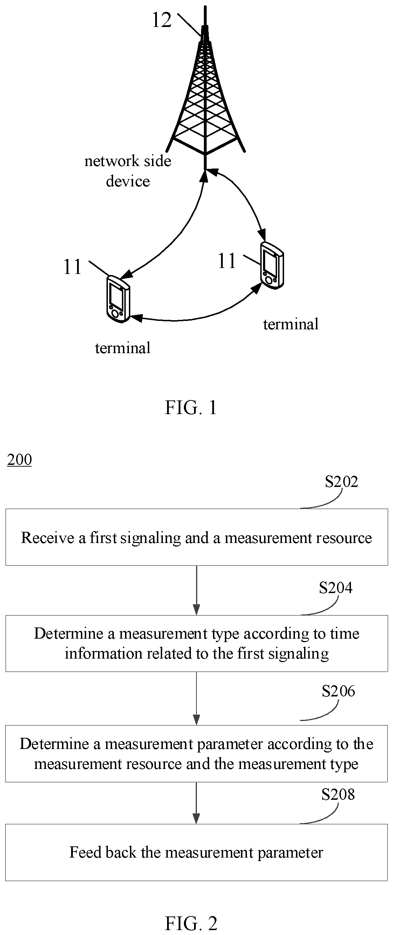

FIG. 1 shows a block diagram of a wireless communication system to which the embodiment of the present application may be applied. The wireless communication system comprises a terminal 11 and a network side device 12. Among them, the terminal 11 is a device with wireless transceiver function that can be deployed on land, including indoors or outdoors, handheld, wearable or vehicle-mounted; it can also be deployed on the water surface (such as ships, etc.); it can also be deployed in the air (such as airplanes, balloons and satellites, etc.). The terminal may be a mobile phone, a Pad, a computer with wireless transceiver function, a Virtual Reality (VR) terminal, an Augmented Reality (AR) terminal, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, etc. The embodiments of the present application do not limit the application scenarios. The terminal may also be sometimes referred to as a user, User Equipment (UE), access terminal, UE unit, UE station, mobile station, mobile terminal, remote station, remote terminal, mobile device, UE terminal, wireless communication device, UE agent or UE device, etc. The embodiment of the present application is not limited. The network side device 12 may include an access network device or a core network device, wherein the access network device 12 may also be referred to as a radio access network device, a Radio Access Network (RAN), a radio access network function or a radio access network unit. The access network device 12 may include a base station, a Wireless Local Area Network (WLAN) access point or a WiFi node, etc. The base station may be referred to as a node B, an evolved node B (eNB), an access point, a Base Transceiver Station (BTS), a radio base station, a radio transceiver, a Basic Service Set (BSS), an Extended Service Set (ESS), a home node B, a home evolved node B, a Transmitting Receiving Point (TRP) or other appropriate terms in the art, as long as the same technical effect is achieved, the base station is not limited to a specific technical vocabulary. It should be noted that in the embodiment of the present application, only the base station in the NR system is used as an example for introduction, and the specific type of the base station is not limited. The above-mentioned network device may also be a core network device, and the core network device may include but is not limited to at least one of the following: core network node, core network function, Mobility Management Entity (MME), Access and Mobility Management Function (AMF), Session Management Function (SMF), User Plane Function (UPF), Policy Control Function (PCF), Policy and Charging Rules Function unit (PCRF), Edge Application Server Discovery Function (EASDF), Unified Data Management (UDM), Unified Data Repository (UDR), Home Subscriber Server (HSS), Centralized network configuration (CNC), Network Repository Function (NRF), Network Exposure Function (NEF), local NEF (or L-NEF), Binding Support Function (BSF), Application Function (AF), etc. It should be noted that in the embodiment of this application, only the core network device in the NR system is introduced as an example, and the specific type of the core network device is not limited.

The network architecture of the mobile communication network (including but not limited to the 3^{rd} Generation (3G), 4^{th} Generation (4G), 5^{th} Generation (5G) and future mobile communication networks) in the embodiments of the present application may include network side device (for example, including but not limited to base station) and reception side device (for example, including but not limited to terminal). It should be understood that in this example, in the downlink, the first communication node (also referred to as the first communication node device) can be a base station side device, and the second communication node (also referred to as the second communication node device) can be a terminal side device. Of course, in the uplink, the first communication node can also be a terminal side device, and the second communication node can also be a base station side device. In the device-to-device communication between the two communication nodes, the first communication node and the second communication node can both be a base station or a terminal.

In the present application, the base station may be a base station or an evolved base station (Evolutional Node B, eNB or eNodeB) in Long Term Evolution (LTE), Long Term Evolution advanced (LTEA), a base station device in 5G network, or a base station in a future communication system, etc. The base station may include various macro base stations, micro base stations, home base stations, wireless remote stations, Reconfigurable Intelligent Surfaces (RISs), routers, Wireless Fidelity (WIFI) devices, or various network side devices such as primary cells and secondary cells.

In the present application, high-level signaling includes but is not limited to Radio Resource Control (RRC), Media Access Control control element (MAC CE), physical layer signaling can also be transmitted between the base station and the terminal, such as transmitting the Physical Downlink Control Channel (PDCCH) and transmitting the physical layer signaling on the Physical Uplink Control Channel (PUCCH).

In the present application, Indicator of various parameters may also be referred to as Index or Identifier (ID), which are completely equivalent concepts, for example, the resource identifier of a wireless system, where the wireless system resources include but are not limited to one of the following: indexes corresponding to the reference signal resource, reference signal resource group, reference signal resource configuration, Channel State Information (CSI) report, CSI report set, terminal, base station, panel, neural network, sub-neural network, neural network layer, etc. The base station can indicate the identifier of one or a group of resources to the terminal through various high-level signaling or physical layer signaling.

In some embodiments, Artificial Intelligence (AI) includes self-learning devices, components, software, and modules such as Machine learning (ML), deep learning, reinforcement learning, transfer learning, deep reinforcement learning, and meta-learning. In some embodiments, artificial intelligence is implemented by an artificial intelligence network (or neural network), the neural network includes multiple layers, each layer includes at least one node, in one example, the neural network includes an input layer, an output layer, at least one hidden layer, wherein each layer of the neural network includes but is not limited to using at least one of a fully connected layer, a dense layer, a convolutional layer, a transposed convolutional layer, a direct connection layer, an activation function, a normalization layer, a pooling layer, etc. In some embodiments, each layer of the neural network may include a sub-neural network, such as a Residual Network block (or Resnet block), a dense network (Densenet Block), a Recurrent Neural Network (RNN), etc. The artificial intelligence network includes a neural network model and/or neural network parameters corresponding to the neural network model, wherein the neural network model can be referred to as the network model, and the neural network parameters can be referred to as the network parameters. A network model defines the network architecture, such as the number of layers of the neural network, the size of each layer, the activation function, the connection status, the convolution kernel and the size convolution step, the convolution type (such as 1 Dimensional (1D) convolution, 2D convolution, 3D convolution, hollow convolution, transposed convolution, separable convolution, grouped convolution, extended convolution, etc.), and the network parameters are the weights and/or biases of each layer of the network in the network model and their values. A network model can correspond to multiple sets of different neural network parameter values to adapt to different scenarios. A neural network model can correspond to multiple different neural network parameter values. The parameters of the neural network are obtained by online training or offline training. For example, by inputting at least one sample and label, the neural network model is trained to obtain the neural network parameters.

In some embodiments, a time slot may be a time slot or a mini slot. A time slot or a mini slot includes at least one symbol. Here, a symbol refers to a time unit in a subframe, frame or time slot, such as an Orthogonal Frequency Division Multiplexing (OFDM) symbol, a Single-Carrier Frequency Division Multiple Access (SC-FDMA) symbol, or an Orthogonal Frequency Division Multiple Access (OFDMA) symbol.

In some embodiments, transmission includes sending or receiving. For example, sending data or signals, receiving data or signals.

In some embodiments, in order to calculate channel state information or perform channel estimation, mobility management, positioning, etc., the base station or user needs to send a reference signal (RS), the reference signal includes but is not limited to a channel state information reference signal (CSI-RS), which includes Zero Power CSI-RS (ZP CSI-RS) and Non-Zero Power CSI-RS (NZP CSI-RS), Channel-State Information-Interference Measurement (CSI-IM), Sounding Reference Signal (SRS), Synchronization Signals Block (SSB), Physical Broadcast Channel (PBCH), Synchronization Signal Block/Physical Broadcast Channel (SSB/PBCH), NZP CSI-RS can be used to measure channels or interference, and CSI-RS can also be used for tracking, called CSI-RS for Tracking (TRS), while CSI-IM is generally used to measure interference and SRS is used for channel estimation. In addition, the Resource Element (RE) set included in the time-frequency resources used to transmit the reference signal is called a reference signal resource, such as CSI-RS resource, SRS resource, CSI-IM resource, SSB resource. Herein, SSB includes synchronization signal blocks and/or physical broadcast channels.

In some embodiments, in a communication system, resources for transmitting reference signals may be referred to as reference signal resources. In order to save signaling overhead, etc., multiple reference signal resources may be combined into a set (such as CSI-RS resource set, CSI-IM resource set, SRS resource set). A reference signal resource set includes at least one reference signal resource, and multiple reference signal resource sets can all come from the same reference signal resource setting (such as CSI-RS resource setting, SRS resource setting, where CSI-RS resource setting may be combined with CSI-IM resource setting, both referred to as CSI-RS resource setting) to configure reference signal parameter information.

In some embodiments, the base station configures measurement resources, and the measurement resources are used to obtain measurement parameters. The measurement resources include C_{N} Channel Measurement Resources (CMR) and/or C_{M} Interference Measurement Resources (IMR), and C_{N} and C_{M} are positive integers. The base station configures the measurement resources in a report config or a reporting setting. In some examples, a channel measurement resource includes at least one channel reference signal resource setting, such as at least one CSI-RS resource setting or at least one SRS resource setting, and a piece of interference measurement resource information includes at least one interference reference signal resource setting, such as at least one CSI-IM resource setting. In some examples, a channel measurement resource includes at least one channel reference signal resource set, such as at least one CSI-RS resource set or at least one SRS resource set, and an interference measurement resource includes at least one interference reference signal resource set, such as at least one CSI-IM resource set. In some examples, a channel measurement resource includes at least one channel reference signal resource, such as at least one CSI-RS resource or at least one SRS resource, and an interference measurement resource includes at least one interference reference signal resource, such as at least one CSI-IM resource.

In some examples, in order to better transmit data or signals, the base station or terminal needs to obtain measurement parameters, which may include channel state information or other parameters for characterizing the channel, wherein the channel state information may include at least one of the following: channel state information-reference signal resource indicator (CSI-RS Resource Indicator, CRI), Synchronization Signals Block Resource Indicator (SSBRI), Reference Signal Received Power (RSRP), Differential RSRP, Channel Quality Indicator (CQI), Precoding Matrix Indicator (PMI), Layer Indicator (LI), Rank Indicator (RI), Level 1 Signal to Interference plus Noise Ratio (L1-SINR), Differential L1-SINR, precoding information. Here, the Precoding Matrix Indicator is a type of precoding information, that is, the case where the precoding information is implemented based on the codebook, such as including the first type of precoding information. The precoding information also includes a way based on non-codebook implementation. For example, the second type of precoding information. In one example, the CSI that only includes the first type of precoding information is called the first type of CSI, and in another example, the CSI that includes the second type of precoding information is called the second type of CSI.

In some embodiments, the terminal and the base station transmit the channel state information matching the channel through the first type of precoding information, and the first type of precoding information is precoding information based on the traditional channel characteristic matrix or the quantized value of the characteristic matrix. For example, a codebook-based method, such as the N-antenna codebook in LTE, where N=2, 4, 8, 12, 16, 24, 32, type I codebook (type I), type II codebook (type II), type II port selection codebook (type II port selection), enhanced type II codebook (enhanced type II), enhanced type II selection codebook (enhanced type II selection), and Further enhanced type II selection codebook (Further enhanced type II selection) in NR. The codebook here includes L codewords, and its main idea is that the base station and the terminal save L codewords in advance according to a prescribed formula, table or dictionary. In some examples, the codeword is a vector. In some examples, the codeword is a matrix, and the matrix includes r columns, each column is also a vector. In one embodiment, each column of the matrix is mutually orthogonal. In some examples, the vector constituting the codeword is a 0-1 vector, in which only one value of the entire vector is 1 and the other values are zero. In some examples, the vector constituting the codeword is a DFT vector (Discrete Fourier Transform, DFT). In some examples, the vectors constituting the codeword are obtained by kronecker product of two or more DFT vectors. In some examples, the vectors constituting the codeword are obtained by connecting two or more DFT vectors by multiplying different phase rotations. In some examples, the vectors constituting the codeword are obtained by multiplying two or more DFT vectors by phase rotation and phase rotation. The base station or terminal finds the codeword that best matches the channel as the optimal codeword to transmit data or signals by searching L codewords. The codewords matched with the channel here include but are not limited to at least one of the following: the distance between the codeword and the channel is the smallest, the correlation between the codeword and the channel is the largest, the distance between the optimal right singular vector or matrix of the channel and the codeword is the smallest, the correlation between the optimal right singular vector or matrix of the channel and the codeword is the largest, the signal-to-noise ratio calculated by the codeword and the channel is the largest, etc. L is an integer greater than 1, generally greater than the number of transmission antennas.

In some examples, the terminal and the base station transmit the channel state information matching the channel through the second type of precoding information, and the second type of precoding information is based on AI to obtain channel state information. In one example, the base station and the terminal obtain channel state information through the encoder of the autoencoder, and the autoencoder includes an encoder and a decoder, wherein the encoder is on the terminal side and the decoder is on the base station side. The terminal compresses the obtained channel H through the encoder to obtain the compressed H1, and quantizes the compressed channel H1 and feeds it back to the base station. The base station receives the quantized H1, dequantizes it and inputs it into the decoder, and the decoder decompresses it, thereby recovering H. In one example, H includes K0 elements, the terminal selects K elements from H as H1, and feeds back the quantization of H1. The base station receives the K quantized elements and dequantizes them, and inputs the dequantized K elements into the AI module, and the AI module outputs K0 elements as the recovery of H, thereby obtaining the precoding matrix of H. Wherein, K and K0 are integers greater than 1, and K<K0. Here, H1 through the compressor or the K elements selected from H are all second type of precoding information. And for simplicity, the quantized H1 is also referred to as second type of precoding information. In one example, the second type of precoding information may also be a precoding matrix different from the first type of precoding information generated by other non-AI methods. In one example, the second type of precoding information may also be a precoding matrix other than the first type of precoding information.

In some examples, in order to transmit CSI, such as terminal feedback CSI, the base station receives CSI. The terminal and the base station need to define a CSI report (CSI report or CSI report config), where the CSI report defines at least one of the following parameters: time-frequency resources for CSI feedback, report quality (reportQuantity) included in CSI, time domain category (reportConfigType) for CSI feedback, channel measurement resources, interference measurement resources, measured bandwidth size and other information. The CSI report can be transmitted on uplink transmission resources, including PUSCH and PUCCH, and the CSI report also includes time domain characteristics, including periodic CSI report (P-CSI), aperiodic CSI report (AP-CSI), and semi-persistent CSI report (SP-CSI). Generally speaking, the number of bits transmitted by P-CSI is relatively small and is transmitted on PUCCH, while the number of bits transmitted by A-CSI is relatively large and is generally transmitted on PUSCH, while SP-CSI can be transmitted based on PUSCH or PUCCH. Among them, P-CSI transmitted based on PUCCH is generally configured by high-level signaling (Radio Resource Control, RRC), SP-CSI transmitted based on PUCCH is also configured or activated by high-level signaling (RRC and/or MAC CE), and SP-CSI or A-CSI transmitted based on PUSCH are triggered by physical layer signaling (Downlink control information, DCI), and DCI is generally transmitted on the Physical downlink control channel (PDCCH). In the embodiment of the present application, feedback CSI may also be referred to as transmission CSI or sending CSI, for example, channel state information is carried on uplink transmission resources for feedback or transmission. The uplink transmission resources and the corresponding CSI are both indicated by a channel state information report. In the embodiment of the present application, feedback of a CSI report refers to feedback of the channel state information corresponding to the CSI report.

In an embodiment of the present application, the base station configures N CSI reports (CSI report) to the terminal through high-level signaling and/or physical layer signaling. Each CSI report has an index value (identity, ID), called CSI reportID. The terminal can select M CSI reports from the N CSI reports according to its own computing capacity or processing capacity and the requirements of the base station. And according to the uplink feedback resources, the channel state information corresponding to at least one CSI report in the M CSI reports is fed back, where N and M are positive integers and M<=N. In one example, M CSI reports need to be fed back, but the transmission resources corresponding to at least two of the M reports are conflicting. The conflict of transmission resources corresponding to the two reports means that at least one symbol in the transmission resources (such as PUCCH or PUSCH) used to feedback the two reports is the same and/or at least one subcarrier is the same.

In some examples, channel information is information obtained based on reference signals (such as CSI-RS) to describe the channel environment between communication nodes, such as a time domain channel matrix and a frequency domain channel matrix. In some examples, channel information is a complex matrix related to the number of transmission antenna Nt, the number of reception antenna Nr, and resource elements (RE). For example, there is at least one Nr*Nt channel matrix on a Physical Resource Block.

As shown in FIG. 2, an embodiment of the present application provides a feedback method 200 for measurement parameter. The method may be executed by a terminal. In other words, the method may be executed by software or hardware installed in the terminal. The method comprises the following steps.

S202: receiving first signaling and a measurement resource.

In one implementation, the first signaling is used to perform one of the following: indicating the measurement type; activating switching of the measurement type; indicating the measurement type and activating the measurement resources; activating switching of the measurement type and measurement resources.

Wherein there is a corresponding relationship between the measurement type and the measurement parameter, and the measurement resource comprises at least one reference signal resource. In one embodiment, artificial intelligence (AI) can be used to efficiently feedback CSI. However, as the channel environment changes, it is possible to update the measurement type, that is, use different measurement methods or measurement modules or different artificial intelligence networks to obtain measurement parameters. For example, the current artificial intelligence network (AI network, including a neural network model and/or a neural network parameter corresponding to the neural network model, wherein the neural network model can be referred to as a network model, and the neural network parameter can be referred to as a network parameter) is no longer suitable for the current scenario, and it is necessary to update and use a new AI network to measure and feedback CSI, such as activating a new AI network with high-level signaling. At this time, the first signaling may indicate to activate the switching of the measurement type. In one example, the terminal is indicated to use a new AI network for subsequent measurements. The measurements made by the new AI network are called the second measurement type, while the measurements made by the original AI network are called the first measurement type. In one example, the terminal is indicated to use a new measurement module to perform measurement in the future. The measurement made by the new measurement module is called the second measurement type, while the measurement made by the original measurement module is called the first measurement type. In one example, the terminal is indicated to use a new measurement method to perform measurement in the future. The measurement made by the new measurement method is called the second measurement type, while the measurement made by the original measurement method is called the first measurement type. In one example, the measurement type used by the terminal before the first indication signaling takes effect is the first measurement type, and the measurement type used by the terminal after the first indication signaling takes effect is the second measurement type. After the first indication signaling takes effect, if the terminal does not have time to use the second measurement type to obtain the measurement parameters, it can fall back to using the default measurement type to obtain the measurement parameters, or still use the first measurement type to obtain the measurement parameters. In an example, the "first" and "second" indications in the first measurement type and the second measurement type are used to distinguish whether the terminal uses a new AI network or a new measurement module or a new measurement method, or uses the original AI network or the original measurement module or the original measurement method, when performing measurements.

The measurement resource includes at least one reference signal resource, for example, the measurement resource includes C_{N} Channel Measurement Resources (CMR) and/or C_{M} Interference Measurement Resources (IMR), where C_{N} and C_{M} are positive integers. The reference signal resource includes.

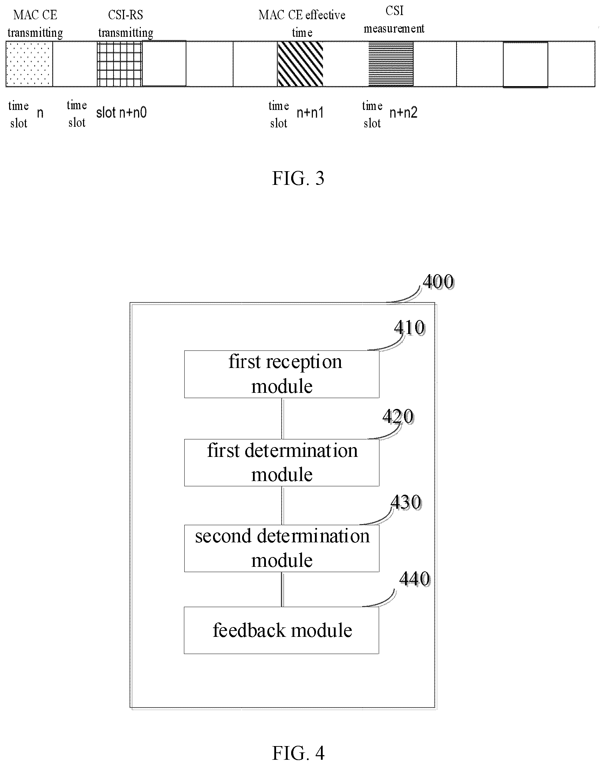

FIG. 3 is a schematic diagram of receiving the first signaling and measuring resources. As shown in FIG. 3, for the measurement and feedback of AI-based CSI, if the AI network needs to be updated, for example, the first AI network is originally used, and then the AI network switching is activated through the first signaling, and the second AI network needs to be used. After the terminal receives the first signaling, it takes some time for the second AI network to take effect.

In one example, the first signaling is a high-level signaling or a field in the high-level signaling, and the field includes at least one bit. In one example, the first signaling is a physical layer signaling or a field in the physical layer signaling, and the field includes at least one bit. In one example, the first signaling is a high-level and physical layer signaling. Among them, the high-level signaling reports but is not limited to RRC and/or MAC CE signaling. The physical layer signaling includes DCI signaling transmitted in the PDCCH.

In some examples, the first signaling transmission time, the effective time of the first signaling, the measurement resource transmission time, the time for measuring the measurement parameter, the time for feeding back the measurement parameter, or the time interval therebetween, are referred to as time information related to the first signaling. The reason why it is referred to as time information related to the first signaling is that the effective time of the first signaling can be determined based on the first signaling transmission time and a bias agreed upon between the communication nodes, and the agreed bias is related to the maximum time for the terminal to receive the signaling and interpret the signaling. The measurement resource transmission time, the time for measuring the measurement parameter, and the time for feeding back the measurement parameter, determine whether the terminal has time to use a new measurement type (such as a new AI network) to obtain the measurement parameters before or after the first signaling takes effect. In an example, the transmission time slot of the first signaling (such as MAC CE) is n, the time slot for transmitting the measurement resource CSI-RS is n+n0, the time slot for the first signaling to takes effect is n+n1, the time slot for measuring the measurement parameter is n+n2, and the time slot for transmitting the measurement parameter is greater than or equal to n+n2. The measurement parameters include at least one of: the first type of precoding information, the second type of precoding information, CRI, SSBRI, L1-RSRP, L1-SINR, etc. MAC CE is used to activate the measurement type switching of the first measurement type and the second measurement type or directly indicate that the measurement type is the first measurement type or the second measurement type. Among them, n0, n1, n2 are positive integers. In one example, the first signaling can jointly activate the measurement resource and the switching of the measurement type. In one example, the first signaling can jointly activate the measurement resource and indicate the measurement type. In one example, the measurement resource is activated or triggered by an independent second signaling. The second signaling is a high-level and/or physical layer signaling.

S204: determining a measurement type according to time information related to the first signaling.

In one implementation, the measurement type used by the terminal for measurement can be determined according to the transmission time slot of the first signaling, the transmission time slot of the measurement resource, and the time slot for the first signaling to takes effect. For example, the measurement resource CSI-RS is obtained before the first signaling takes effect, and the measurement parameter is obtained after the first signaling takes effect. The relationship between the effective time of the first signaling, the measurement resource transmission time, the time for measuring the measurement parameter and the time for feeding back the measurement parameter, and the computing capability of the terminal together determine whether the terminal is able to use the new measurement type indicated by the first signaling to obtain the measurement parameter. If the terminal has time to use the new measurement type to obtain the measurement parameter, the new measurement type is used to obtain the measurement parameter; otherwise, the original measurement type is used to obtain the measurement parameter, or the default measurement type is used to obtain the measurement parameter. Using the default measurement type to obtain the measurement parameter includes using the traditional first type of precoding information to obtain the measurement parameter or ignoring the current measurement operation, and determining that the measurement parameter is an empty set.

In an implementation, the measurement type comprises at least one of the following: a first measurement type, which is the measurement type used by a terminal before the first signaling takes effect, such as obtaining measurement parameters based on the original AI network or the original measurement method or the original measurement module; a second measurement type, which is the measurement type used by the terminal after the first signaling takes effect, such as obtaining measurement parameters based on the updated AI network or the updated measurement method or the updated measurement module indicated by the first signaling; a third measurement type, which is a default measurement type of the terminal, the default measurement type of the terminal may be, for example, a measurement type set in the terminal when the terminal leaves the factory, or a fallback measurement type agreed upon between communication nodes. For example, the measurement parameters are obtained based on traditional methods such as DFT codebook or eigenvector decomposition. Alternatively, no measurement is performed, that is, the third measurement parameter corresponding to the third measurement type obtained is an empty set.

S206: determining a measurement parameter according to measurement resource and the measurement type.

In an implementation, the measurement type is determined to be a first measurement type, the first measurement type obtains a first measurement parameter, that is, the measurement resource is measured according to the measurement method corresponding to the first measurement type to obtain the first measurement parameter; the measurement type is determined to be a second measurement type, the second measurement type obtains a second measurement parameter, that is, the measurement resource is measured according to the measurement method corresponding to the second measurement type to obtain the second measurement parameter; the measurement type is determined to be a third measurement type, the third measurement type obtains a third measurement parameter, that is, the measurement resource is measured according to the measurement method corresponding to the third measurement type to obtain the third measurement parameter. In an implementation, the third measurement parameter may be an empty set.

In one example, the first signaling takes a first value, indicating that the terminal measures the measurement resource using a method corresponding to the first measurement type to obtain a first measurement parameter, the first signaling takes a second value, indicating that the terminal measures the measurement resource using a method corresponding to the second measurement type to obtain a second measurement parameter. In one example, the first signaling is used to activate the switching of the measurement type, that is, after the first signaling takes effect, if the terminal has enough time, the terminal can use the new measurement type to obtain the measurement parameters. In one example, if the terminal does not have enough time to use the new measurement type to obtain the measurement parameters, using the default measurement type to obtain the measurement parameters. In one example, if the terminal does not have enough time to use the new measurement type to obtain the measurement parameters, using the measurement type before the activation of the first signaling to obtain the measurement parameters.

In some examples, the base station sends measurement resources, where the measurement resources may include at least one set of channel measurement resources, of course, at least one set of interference measurement resources. In one example, the first measurement parameter and the second measurement parameter are second type of precoding matrices, but correspond to different neural network parameters and/or models.

The first measurement parameter and the second measurement parameter correspond to different neural network parameters and/or models. For example, the first measurement parameter is measured according to the first set of neural network parameters and/or models, and the second measurement parameter is measured according to the second set of neural network parameters and/or models. Wherein the first set of neural network parameters and/or models correspond to the neural network parameters and/or models that before the first signaling takes effect. The second set of neural network parameters and/or models correspond to the neural network parameters and/or models that after the first signaling takes effect. The first signaling includes a first value and a second value. In some examples, the first value is 0 and the second value is a non-zero value. In some examples, the first value is TRUE and the second value is FLASE. In some examples, the first value is a non-zero value and the second value is 0. In some examples, the first value is FLASE and the second value is TRUE. In some examples, the first signaling is a combination of one field value or multiple field values.

S208: feeding back the measurement parameter.

The feedback method for measurement parameter provided in the embodiment of the present application, can select a suitable measurement type to obtain the measurement parameters by, receiving first signaling and a measurement resource; determining a measurement type according to time information related to the first signaling; determining a measurement parameter according to measurement resource and the measurement type; feeding back the measurement parameter, thereby being able to feed back more accurate measurement parameters.

In an implementation, determining the measurement parameter according to the measurement resource and the measurement type comprising one of the following: determining the measurement type to be the first measurement type, obtaining a first measurement parameter according to the first measurement type; determining the measurement type to be the second measurement type, obtaining a second measurement parameter according to the second measurement type; determining the measurement type to be the third measurement type, obtaining a third measurement parameter according to the third measurement type. In an implementation, the third measurement parameter may be an empty set.

In an implementation, the time information comprises at least one of the following:
a first time, which is the time for transmitting the measurement resource, such as slot n+n0 in FIG. 3;
a second time, which is the effective time of the first signaling, such as slot n+n1 in FIG. 3;
a third time, which is the time for obtaining the measurement parameter, such as slot n+n2 in FIG. 3;
a fourth time, which is the time for transmitting the measurement parameter.

In an example, the first time, the second time, the third time, and the fourth time are integers, the first time is less than the second time, and the second time is less than the third time and/or the fourth time.

When the difference between the second time and the first time (n1-n0) is not greater than a first threshold, using the updated second measurement type to obtain the measurement parameter, for example, the second AI network, since the time for transmitting measurement resource is relatively close to effective time of the first signaling, and the terminal may have enough time to obtain the measurement parameters using the new measurement type, so determining the measurement type to be the second measurement type, and obtaining the second measurement parameter according to the second measurement type. When the difference between the second time and the first time (n1-n0) is greater than a first threshold, the terminal may not have enough time to obtain the measurement parameters using the new measurement type, so determining the measurement type to be the first measurement type, and obtaining the first measurement parameter according to the first measurement type. Or, when the difference between the second time and the first time (n1-n0) is greater than a first threshold, determining the measurement type to be the third measurement type, and obtaining the third measurement parameter according to the third measurement type.

When the difference between the third time and the second time (n2-n1) is greater than a second threshold, since the time interval between the effective time of the first signaling and the time to obtain the measurement parameters is relatively large, the terminal may have enough time to obtain the measurement parameters using the new measurement type, where the measurement type is the second measurement type, and the second measurement parameters are obtained according to the second measurement type; When the difference between the third time and the second time (n2-n1) is not greater than a second threshold, since the time interval between the effective time of the first signaling and the time to obtain the measurement parameters is relatively small, the terminal may not have enough time to obtain the measurement parameters using the new measurement type, so determining the measurement type to be the third measurement type, and obtaining the third measurement parameter according to the third measurement type. Or, when the difference between the third time and the second time (n2-n1) is not greater than a second threshold, determining the measurement type to be the first measurement type, and obtaining the first measurement parameter according to the first measurement type.

When the difference between the third time and the first time (n2-n0) is greater than a third threshold, since the time interval between the time to obtain the measurement parameters and the time to transmit the measurement resources is relatively large, the terminal may have enough time to obtain the measurement parameters using the new measurement type, so the measurement type is the second measurement type, and obtaining the second measurement parameter according to the second measurement type. When the difference between the third time and the first time (n2-n0) is not greater than a second threshold, determining the measurement type to be the third measurement type, and obtaining the third measurement parameter according to the third measurement type. Or, when the difference between the third time and the first time (n2-n0) is not greater than a second threshold, since the time interval between the time to obtain the measurement parameters and the time to transmit the measurement resources is relatively small, the terminal may not have enough time to obtain the measurement parameters using the new measurement type, so determining the measurement type to be the first measurement type, and obtaining the first measurement parameter according to the first measurement type.

When the difference between the fourth time and the second time is greater than a fourth threshold, determining the measurement type to be the second measurement type, and obtaining the second measurement parameter according to the second measurement type. Since the time interval between the time to transmit the measurement parameters and the effective time of the first signaling is relatively large, the terminal may have enough time to obtain the measurement parameters using the new measurement type. When the difference between the fourth time and the second time is not greater than a fourth threshold, determining the measurement type to be the third measurement type, and obtaining the third measurement parameter according to the third measurement type. Or, when the difference between the fourth time and the second time is not greater than a fourth threshold, determining the measurement type to be the first measurement type, and obtaining the first measurement parameter according to the first measurement type. Since the time interval between the time to transmit the measurement parameters and the effective time of the first signaling is relatively small, the terminal may not have enough time to obtain the measurement parameters using the new measurement type.

When the fourth time is greater than the third time, determining the measurement type to be the second measurement type, and obtaining the second measurement parameter according to the second measurement type. Since the time interval between the time to transmit the measurement parameters and the time to obtain the measurement parameters is relatively large, the terminal may not have enough time to obtain the measurement parameters using the new measurement type. When the fourth time is not greater than the third time, determining the measurement type to be the third measurement type, and obtaining the third measurement parameter according to the third measurement type. Or, when the fourth time is not greater than the third time, determining the measurement type to be the first measurement type, and obtaining the first measurement parameter according to the first measurement type. Since the time interval between the time to transmit the measurement parameters and the time to obtain the measurement parameters is relatively small, the terminal may not have enough time to obtain the measurement parameters using the new measurement type.

When the difference between the third time and the second time is greater than the measurement duration of measuring the measurement resource, determining the measurement type to be the second measurement type, and obtaining the second measurement parameter according to the second measurement type. Since the time interval between the time to obtain the measurement parameters and the effective time of the first signaling is relatively large, the terminal may have enough time to obtain the measurement parameters using the new measurement type. When the difference between the third time and the second time is not greater than the measurement duration of measuring the measurement resource, determining the measurement type to be the third measurement type, and obtaining the third measurement parameter according to the third measurement type. Or, when the difference between the third time and the second time is not greater than the measurement duration of measuring the measurement resource, determining the measurement type to be the first measurement type, and obtaining the first measurement parameter according to the first measurement type. Since the time interval between the time to obtain the measurement parameters and the effective time of the first signaling is relatively small, the terminal may not have enough time to obtain the measurement parameters using the new measurement type.

When the third time is greater than the second time, and the second time is greater than the first time, determining the measurement type to be the third measurement type, and obtaining the empty set according to the third measurement type, that is, no measurement is performed. In other words, when n0<n1<n2, the terminal does not perform CSI measurement. At this time, the base station has sent the first signaling for indicating to update the measurement type, but the terminal may not have enough time to obtain measurement parameters using the new measurement type, and in this case, measurement may not be performed.

When the third time is greater than the second time, and the second time is greater than the first time, determining the measurement type to be the first measurement type, and obtaining the first measurement parameter according to the first measurement type. In other words, when n0<n1<n2, the terminal performs CSI measurement. In one embodiment, when the first measurement parameter and other measurement parameters are transmitted simultaneously on the transmission resource to feed back the measurement parameters, and the capability of transmitting the first measurement parameter and other measurement parameters simultaneously is not available, the priority of transmitting the first measurement parameter on the transmission resource can be reduced, and other measurement parameters can be transmitted preferentially. At this time, the base station has sent the first signaling for indicating to update the measurement type, but the new measurement type, such as the second measurement type, has not yet taken effect or the terminal has no time to use the new measurement type to obtain the measurement parameters. In this case, the measurement can be performed. However, in one implementation, if the target measurement type is the first measurement type, setting the priority of the first measurement parameter lower than the priority of other measurement parameters transmitted on the same transmission resource. Prioritize the transmission of other CSI, that is, the first measurement type corresponding to the first measurement model is used for measurement but the measurement parameters are not necessarily reported. This is because the channel environment has changed, and the performance of obtaining channel state information using the first measurement model may not be good. If there is a conflict, it can be not transmitted, but if there is sufficient capacity to transmit the first measurement parameter, it can be reported. In one example, if the transmission resource can transmit the first measurement parameter and other CSI at the same time, then the transmission resource can transmit the first measurement parameter and other CSI at the same time. In one example, if the transmission resource only transmits the first measurement parameter, then the transmission resource transmits the first measurement parameter.

In another implementation, if the target measurement type is the third measurement type, the measurement parameter can be reported. The terminal obtains the third measurement parameter corresponding to the third measurement type according to the measurement resource, and the third measurement parameter is the first type of precoding information. In one embodiment, the number of bits corresponding to the third measurement parameter is not greater than the number of bits corresponding to the first measurement parameter; or the number of bits corresponding to the third measurement parameter is not greater than the effective transmission bits of the corresponding transmission resource; or the number of bits corresponding to the second measurement parameter is not greater than the number of bits corresponding to the first measurement parameter. This is because the size of the transmission resource is configured according to the output size corresponding to the first measurement type. If the number of bits corresponding to the new second measurement parameter or the number of bits corresponding to the third measurement parameter is greater than the number of bits corresponding to the original measurement parameter, there is a possibility that the new measurement parameter cannot be effectively transmitted.

In another implementation, the time information comprises at least one of the following: a first time interval, which is used to indicate the time interval between the time for transmitting the reference signal resource and the effective time of the first signaling; a second time interval, which is used to indicate the time interval between the effective time of the first signaling and the time for obtaining the measurement parameter; a third time interval, which is used to indicate the time interval between the effective time of the first signaling and the time for feeding back the measurement parameter; a fourth time interval, which is used to indicate the time interval between the effective time of the first signaling and the time for transmitting the measurement parameter. In other words, the first time interval is determined according to the first time and the second time; the second time interval is determined according to the second time and the third time; the third time interval is determined according to the first time and the third time; and the fourth time interval is determined according to the second time and the fourth time.

In one implementation, when the first time interval is not greater than the first threshold, determining the measurement type to be the second measurement type, and obtaining the second measurement parameter according to the second measurement type. When the first time interval is greater than the first threshold, determining the measurement type to be the third measurement type, and obtaining the third measurement parameter according to the third measurement type. Or, when the first time interval is greater than the first threshold, determining the measurement type to be the first measurement type, and obtaining the first measurement parameter according to the first measurement type. This is because the time interval between the time for transmitting the reference signal resource and the effective time of the first signaling is relatively large, the terminal may have enough time to obtain the measurement parameters using the new measurement type, conversely the terminal may not have enough time to obtain the measurement parameters using the new measurement type.

When the second time interval is greater than the second threshold, determining the measurement type to be the second measurement type, and obtaining the second measurement parameter according to the second measurement type; when the second time interval is not greater than the second threshold, determining the measurement type to be the third measurement type, and obtaining the third measurement parameter according to the third measurement type. Or, when the second time interval is not greater than the second threshold, determining the measurement type to be the first measurement type, and obtaining the first measurement parameter according to the first measurement type. This is because the time interval between the effective time of the first signaling and the time for obtaining the measurement parameter is relatively large, the terminal may have enough time to obtain the measurement parameters using the new measurement type, conversely the terminal may not have enough time to obtain the measurement parameters using the new measurement type.

When the third time interval is greater than the third threshold, determining the measurement type to be the second measurement type, and obtaining the second measurement parameter according to the second measurement type; when the third time interval is not greater than the third threshold, determining the measurement type to be the third measurement type, and obtaining the third measurement parameter according to the third measurement type. Or, when the third time interval is not greater than the third threshold, determining the measurement type to be the first measurement type, and obtaining the first measurement parameter according to the first measurement type. This is because the time interval between the time for transmitting the reference signal resource and the time for feeding back the measurement parameter is relatively large, the terminal may have enough time to obtain the measurement parameters using the new measurement type, conversely the terminal may not have enough time to obtain the measurement parameters using the new measurement type.

When the fourth time interval is greater than the fourth threshold, determining the measurement type to be the second measurement type, and obtaining the second measurement parameter according to the second measurement type; when the fourth time interval is not greater than the fourth threshold, determining the measurement type to be the third measurement type, and obtaining the third measurement parameter according to the third measurement type. Or, when the fourth time interval is not greater than the fourth threshold, determining the measurement type to be the first measurement type, and obtaining the first measurement parameter according to the first measurement type. This is because the time interval between the effective time of the first signaling and the time for transmitting the measurement parameter is relatively large, the terminal may have enough time to obtain the measurement parameters using the new measurement type, conversely the terminal may not have enough time to obtain the measurement parameters using the new measurement type.

When the second time interval is less than the fourth time interval, determining the measurement type to be the second measurement type, and obtaining the second measurement parameter according to the second measurement type. When the second time interval is not less than the fourth time interval, determining the measurement type to be the third measurement type, and obtaining the third measurement parameter according to the third measurement type. Or, when the second time interval is not less than the fourth time interval, determining the measurement type to be the first measurement type, and obtaining the first measurement parameter according to the first measurement type.

When the second time interval is less than or equal to the measurement duration of measuring the measurement resource, determining the measurement type to be the second measurement type, and obtaining the second measurement parameter according to the second measurement type. When the second time interval is greater than the measurement duration of measuring the measurement resource, determining the measurement type to be the third measurement type, and obtaining the third measurement parameter according to the third measurement type. Or, when the second time interval is greater than the measurement duration of measuring the measurement resource, determining the measurement type to be the first measurement type, and obtaining the first measurement parameter according to the first measurement type.

In one implementation, the measurement duration of measuring the measurement resource is determined according to Z and offset Δt, for example, Z+offset Δt, where Z is the distance between the last symbol of the transmission resource for transmitting the measurement resource and the first symbol of the transmission resource for feeding back the measurement parameter, the offset may be determined by the measurement type, such as the offset between the first measurement type and the second measurement type is greater than 0, and the default offset based on the traditional codebook may be 0. In an example, the offset may be configured by the base station.

When the second time interval is greater than the first time interval, determining the measurement type to be the third measurement type, and obtaining an empty set according to the third measurement type. In one implementation, when the first time interval is greater than 0 and the second time interval is greater than 0, no measurement is performed. In other words, when n0<n1<n2, the terminal does not perform CSI measurement. At this time, the base station has sent the first signaling for indicating to update the measurement type, but the new measurement type, that is, the second measurement type (such as a new AI network or a new measurement method or a new measurement module), has not yet taken effect or the terminal has no time to use the new measurement type to obtain the measurement parameters, and in this case, no measurement is performed.

The first time interval is greater than 0 and the second time interval is greater than 0, and the target measurement type is the first measurement type or the third measurement type. In other words, when n0<n1<n2, the terminal performs CSI measurement. On the basis of performing the measurement, in one embodiment, when the first measurement parameter and other measurement parameters are transmitted simultaneously on the transmission resource to feed back the measurement parameters, and the capability of transmitting the first measurement parameter and other measurement parameters simultaneously is not available, the priority of transmitting the first measurement parameter on the transmission resource can be reduced, and other measurement parameters can be transmitted preferentially.

At this time, the base station has sent the first signaling for indicating to update the measurement model, but the new measurement type, such as the second measurement type, has not yet taken effect or the terminal has no time to use the new measurement type to obtain the measurement parameters. In this case, the measurement can be performed. However, in one implementation, if the target measurement type is the first measurement type, setting the priority of the first measurement parameter lower than the priority of other measurement parameters transmitted on the same transmission resource. Prioritize the transmission of other CSI, that is, the first measurement type corresponding to the first measurement model is used for measurement but the measurement parameters are not necessarily reported. This is because the channel environment has changed, and the performance of obtaining channel state information using the first measurement model may not be good. If there is a conflict, it can be not transmitted, but if there is sufficient capacity to transmit the first measurement parameter, it can be reported. In one example, if the transmission resource can transmit the first measurement parameter and other CSI at the same time, then the transmission resource can transmit the first measurement parameter and other CSI at the same time. In one example, if the transmission resource can only transmit the first measurement parameter, then the transmission resource transmits the first measurement parameter.

In another implementation, if the target measurement type is the third measurement type, the measurement parameter can be reported. The terminal obtains the third measurement parameter corresponding to the third measurement type according to the measurement resource, and the third measurement parameter is the first type of precoding information. In one implementation, the number of bits corresponding to the third measurement parameter is not greater than the number of bits corresponding to the first measurement parameter, or the number of bits corresponding to the third measurement parameter is not greater than the effective transmission bits of the corresponding transmission resource; or the number of bits corresponding to the second measurement parameter is not greater than the number of bits corresponding to the first measurement parameter. This is because the size of the transmission resource is configured according to the output size corresponding to the first measurement type. If the number of bits corresponding to the new second measurement parameter or the number of bits corresponding to the third measurement parameter is greater than the number of bits corresponding to the original measurement parameter, there is a possibility that the new measurement parameter cannot be effectively transmitted.

When the target measurement type is the first measurement type, measuring the measurement resource according to the first measurement type to obtain the first measurement parameter, where the first measurement parameter is the second type of precoding information. When the target measurement type is the second measurement type, measuring the measurement resource according to the second measurement type to obtain the second measurement parameter, where the second measurement parameter is the second type of precoding information. When the target measurement type is the third measurement type, measuring the measurement resource according to the third measurement type to obtain the third measurement parameter, where the third measurement parameter is the first type of precoding information.

Therefore, the feedback method for measurement parameter provided by an embodiment of the present application can select a suitable measurement type to obtain measurement parameters according to the processing capability or channel conditions of the terminal in the case where the measurement resource is before the first signaling takes effect, and the new measurement type is updated or the measurement is after the first signaling takes effect, thereby being able to feedback more accurate measurement parameters.

FIG. 4 is a schematic diagram of the structure of a feedback device for measurement parameters according to an embodiment of the present application. As shown in FIG. 4, the feedback device 400 for measurement parameters includes: a first reception module 410, a first determination module 420, a second determination module 430, and a feedback module 440.

The first receiving module 410 is for receiving first signaling and a measurement resource; the first determination module 420 is for determining a measurement type according to time information related to the first signaling; the second determination module 430 is determining a measurement parameter according to measurement resource and the measurement type; and the feedback module 440 is for feeding back the measurement parameter.

In one implementation, the first signaling is used to process one of the following: indicating the measurement type; activating switching of the measurement type; indicating the measurement type and activating the measurement resources; activating switching of the measurement type and the measurement resources; wherein there is a corresponding relationship between the measurement type and the measurement parameter, and the measurement resource comprises at least one reference signal resource.

In one implementation, the measurement type comprises at least two of the following: a first measurement type, which is the measurement type used by a terminal before the first signaling takes effect; a second measurement type, which is the measurement type used by the terminal after the first signaling takes effect; and a third measurement type, which is a default measurement type of the terminal.

In one implementation, determining the measurement parameter according to the measurement resource and the measurement type comprising one of the following: if the measurement type is the first measurement type, obtaining a first measurement parameter according to the first measurement type; if the measurement type is the second measurement type, obtaining a second measurement parameter according to the second measurement type; and if the measurement type is the third measurement type, obtaining a third measurement parameter according to the third measurement type.

In one implementation, the first measurement parameter is a second type of precoding information; or the second measurement parameter is the second type of precoding information; or the third measurement parameter is an empty set; or the third measurement parameter is a first type of precoding information.

In one implementation, the priority of the first measurement parameter is lower than the priority of other measurement parameters transmitted on the same transmission resource.

In one implementation, the number of bits corresponding to the third measurement parameter is not greater than the number of bits corresponding to the first measurement parameter, or the number of bits corresponding to the third measurement parameter is not greater than the effective transmission bits of the corresponding transmission resource, or the number of bits corresponding to the second measurement parameter is not greater than the number of bits corresponding to the first measurement parameter.

In one implementation, the time information comprises at least one of the following: a first time, which is the time for transmitting the measurement resource; a second time, which is the effective time of the first signaling; a third time, which is the time for obtaining the measurement parameter; a fourth time, which is the time for transmitting the measurement parameter; wherein, the first time is less than the second time, and the second time is less than the third time and/or the fourth time.

In one implementation, determining the measurement type according to the time information related to the first signaling comprises at least one of the following: when the difference between the second time and the first time is not greater than a first threshold, determining the measurement type to be the second measurement type, the second measurement type corresponds to the second measurement parameter; when the difference between the second time and the first time is greater than the first threshold, determining the measurement type to be the first measurement type, the first measurement type corresponds to the first measurement parameter; or, when the difference between the second time and the first time is greater than the first threshold, determining the measurement type to be the third measurement type, the third measurement type corresponds to the third measurement parameter.

In one implementation, determining the measurement type according to the time information related to the first signaling comprises at least one of the following: when the difference between the third time and the second time is greater than a second threshold, determining the measurement type to be the second measurement type, the second measurement type corresponds to the second measurement parameter; when the difference between the third time and the second time is not greater than the second threshold, determining the measurement type to be the first measurement type, the first measurement type corresponds to the first measurement parameter; or, when the difference between the third time and the second time is not greater than the second threshold, determining the measurement type to be the third measurement type, the third measurement type corresponds to the third measurement parameter.

In one implementation, determining the measurement type according to the time information related to the first signaling comprises at least one of the following: when the difference between the third time and the first time is greater than a third threshold, determining the measurement type to be the second measurement type, the second measurement type corresponds to the second measurement parameter; when the difference between the third time and the first time is not greater than the second threshold, determining the measurement type to be the first measurement type, the first measurement type corresponds to the first measurement parameter; or, when the difference between the third time and the first time is not greater than the second threshold, determining the measurement type to be the third measurement type, the third measurement type corresponds to the third measurement parameter.

In one implementation, determining the measurement type according to the time information related to the first signaling comprises at least one of the following: when the difference between the fourth time and the second time is greater than a fourth threshold, determining the measurement type to be the second measurement type, the second measurement type corresponds to the second measurement parameter; when the difference between the fourth time and the second time is not greater than the fourth threshold, determining the measurement type to be the first measurement type, the first measurement type corresponds to the first measurement parameter; when the difference between the fourth time and the second time is not greater than the fourth threshold, determining the measurement type to be the third measurement type, the third measurement type corresponds to the third measurement parameter.

In one implementation, determining the measurement type according to the time information related to the first signaling comprises at least one of the following: when the fourth time is greater than the third time, determining the measurement type to be the second measurement type, the second measurement type corresponds to the second measurement parameter; when the fourth time is not greater than the third time, determining the measurement type to be the first measurement type, the first measurement type corresponds to the first measurement parameter; when the fourth time is not greater than the third time, determining the measurement type to be the third measurement type, the third measurement type corresponds to the third measurement parameter.

In one implementation, determining the measurement type according to the time information related to the first signaling comprises at least one of the following: when the difference between the third time and the second time is greater than the measurement duration of measuring the measurement resource, determining the measurement type to be the second measurement type, the second measurement type corresponds to the second measurement parameter; when the difference between the third time and the second time is not greater than the measurement duration of measuring the measurement resource, determining the measurement type to be the first measurement type, the first measurement type corresponds to the first measurement parameter; or, when the difference between the third time and the second time is not greater than the measurement duration of measuring the measurement resource, determining the measurement type to be the third measurement type, the third measurement type corresponds to the third measurement parameter.

In one implementation, determining the measurement type according to the time information related to the first signaling comprises at least one of the following: determining the measurement type to be the third measurement type, the third measurement type may correspond to an empty set; determining the measurement type to be the first measurement type, the first measurement type may correspond to the first measurement parameter.

In one implementation, the time information comprises at least one of the following: a first time interval, which is used to indicate the time interval between the time for transmitting the reference signal resource and the effective time of the first signaling; a second time interval, which is used to indicate the time interval between the effective time of the first signaling and the time for obtaining the measurement parameter; a third time interval, which is used to indicate the time interval between the effective time of the first signaling and the time for feeding back the measurement parameter; a fourth time interval, which is used to indicate the time interval between the effective time of the first signaling and the time for transmitting the measurement parameter.

In one implementation, determining the measurement type according to the time information related to the first signaling comprises at least one of the following: when the first time interval is not greater than the first threshold, determining the measurement type to be the second measurement type, the second measurement type corresponds to the second measurement parameter; when the first time interval is greater than the first threshold, determining the measurement type to be the first measurement type, the first measurement type corresponds to the first measurement parameter; when the first time interval is greater than the first threshold, determining the measurement type to be the third measurement type, the third measurement type corresponds to the third measurement parameter.

In one implementation, determining the measurement type according to the time information related to the first signaling comprises at least one of the following: when the second time interval is greater than the second threshold, determining the measurement type to be the second measurement type, the second measurement type corresponds to the second measurement parameter; when the second time interval is not greater than the second threshold, determining the measurement type to be the first measurement type, the first measurement type corresponds to the first measurement parameter; when the second time interval is not greater than the second threshold, determining the measurement type to be the third measurement type, the third measurement type corresponds to the third measurement parameter.

In one implementation, determining the measurement type according to the time information related to the first signaling comprises at least one of the following: when the third time interval is greater than the third threshold, determining the measurement type to be the second measurement type, the second measurement type corresponds to the second measurement parameter; when the third time interval is not greater than the third threshold, determining the measurement type to be the first measurement type, the first measurement type corresponds to the first measurement parameter; when the third time interval is not greater than the third threshold, determining the measurement type to be the third measurement type, the third measurement type corresponds to the third measurement parameter.

In one implementation, determining the measurement type according to the time information related to the first signaling comprises at least one of the following: when the fourth time interval is greater than the fourth threshold, determining the measurement type to be the second measurement type, the second measurement type corresponds to the second measurement parameter; when the fourth time interval is not greater than the fourth threshold, determining the measurement type to be the first measurement type, the first measurement type corresponds to the first measurement parameter; when the fourth time interval is not greater than the fourth threshold, determining the measurement type to be the third measurement type, the third measurement type corresponds to the third measurement parameter.

In one implementation, determining the measurement type according to the time information related to the first signaling comprises at least one of the following: when the second time interval is less than the fourth time interval, determining the measurement type to be the second measurement type, the second measurement type corresponds to the second measurement parameter; when the second time interval is not less than the fourth time interval, determining the measurement type to be the first measurement type, the first measurement type corresponds to the first measurement parameter; when the second time interval is not less than the fourth time interval, determining the measurement type to be the third measurement type, the third measurement type corresponds to the third measurement parameter.

In one implementation, determining the measurement type according to the time information related to the first signaling comprises at least one of the following: when the second time interval is less than or equal to the measurement duration of measuring the measurement resource, determining the measurement type to be the second measurement type, the second measurement type corresponds to the second measurement parameter; when the second time interval is greater than the measurement duration of measuring the measurement resource, determining the measurement type to be the first measurement type, the first measurement type corresponds to the first measurement parameter; when the second time interval is greater than the measurement duration of measuring the measurement resource, determining the measurement type to be the third measurement type, the third measurement type corresponds to the third measurement parameter.

In one implementation, the measurement duration of measuring the measurement resource is determined according to Z and offset Δt, where Z is the distance between the last symbol of the transmission resource for transmitting the measurement resource and the first symbol of the transmission resource for feeding back the measurement parameter.

In one implementation, determining the measurement type according to the time information related to the first signaling comprises at least one of the following:
when the second time interval is greater than the first time interval, determining the measurement type to be an empty set.

The measurement type is determined to be the first measurement type, the first measurement type corresponds to the first measurement parameter.

The feedback device for the measurement parameter in the embodiment of the present application can be an electronic device, such as an electronic device with an operating system, or a component in the electronic device, such as an integrated circuit or a chip. The electronic device can be a terminal, or it can be other devices other than a terminal. Exemplarily, the terminal can include but is not limited to the types of terminals listed above, and other devices can be servers, Network Attached Storage (NAS), etc., the embodiments of the present application are not specifically limited.

The feedback device for measuring parameters provided in the embodiment of the present application can implement the various processes implemented in the feedback method embodiment of FIG. 2 and achieve the same technical effect. To avoid repetition, it is not described here.

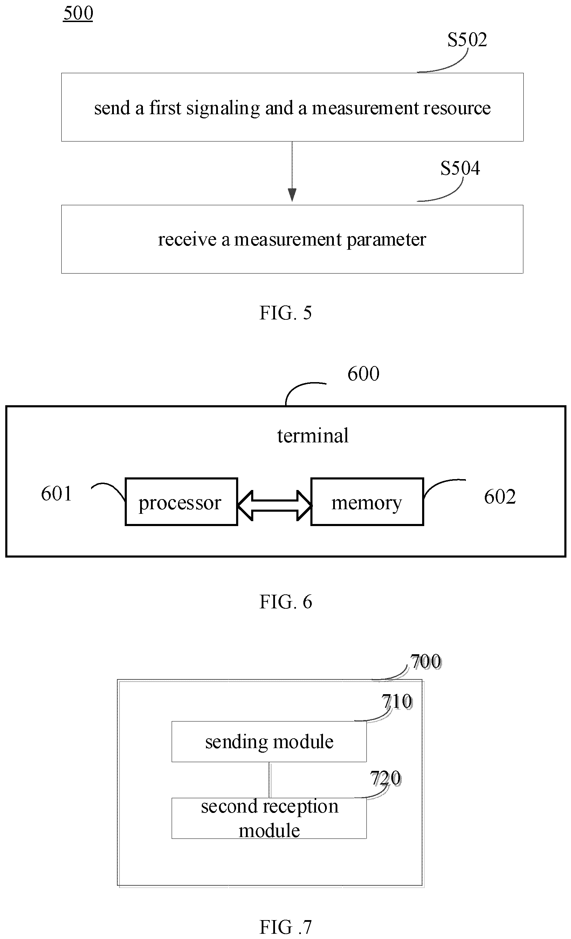

As shown in FIG. 5, an embodiment of the present application provides a reception method 500 for measurement parameter. The method can be executed by a network device, such as a base station. **In** other words, the method can be executed by software or hardware installed in a terminal. The method comprises the following steps:
S502: sending first signaling and a measurement resource;
S504: receiving a measurement parameter.

The measurement parameter is determined according to the measurement resource and a measurement type, and the measurement type is determined according to time information related to the first signaling.

In one implementation, the first signaling is used to process one of the following: indicating the measurement type; activating switching of the measurement type; indicating the measurement type and activating the measurement resources; activating switching of the measurement type and the measurement resources; wherein there is a corresponding relationship between the measurement type and the measurement parameter, and the measurement resource comprises at least one reference signal resource.

In one implementation, the measurement type comprises at least two of the following: a first measurement type, which is the measurement type used by a terminal before the first signaling takes effect; a second measurement type, which is the measurement type used by the terminal after the first signaling takes effect; a third measurement type, which is a default measurement type of the terminal.

In one implementation, the measurement parameter is determined according to the measurement resource and the measurement type comprising one of the following: if the measurement type is the first measurement type, obtaining a first measurement parameter according to the first measurement type; if the measurement type is the second measurement type, obtaining a second measurement parameter according to the second measurement type; if the measurement type is the third measurement type, obtaining a third measurement parameter according to the third measurement type.

In one implementation, the first measurement parameter is a second type of precoding information; or the second measurement parameter is the second type of precoding information; or the third measurement parameter is an empty set; or the third measurement parameter is a first type of precoding information.

In one implementation, the priority of the first measurement parameter is lower than the priority of other measurement parameters transmitted on the same transmission resource.

In one implementation, the number of bits corresponding to the third measurement parameter is not greater than the number of bits corresponding to the first measurement parameter; or the number of bits corresponding to the third measurement parameter is not greater than the effective transmission bits of the corresponding transmission resource; or the number of bits corresponding to the second measurement parameter is not greater than the number of bits corresponding to the first measurement parameter.

In one implementation, the time information comprises at least one of the following: a first time, which is the time for transmitting the measurement resource; a second time, which is the effective time of the first signaling; a third time, which is the time for obtaining the measurement parameter; a fourth time, which is the time for transmitting the measurement parameter; wherein, the first time is less than the second time, and the second time is less than the third time and/or the fourth time.

In one implementation, the measurement type is determined according to the time information related to the first signaling comprises at least one of the following: when the difference between the second time and the first time is not greater than a first threshold, determining the measurement type to be the second measurement type, the second measurement type corresponds to the second measurement parameter; when the difference between the second time and the first time is greater than the first threshold, determining the measurement type to be the first measurement type, the first measurement type corresponds to the first measurement parameter; when the difference between the second time and the first time is greater than the first threshold, determining the measurement type to be the third measurement type, the third measurement type corresponds to the third measurement parameter.

In one implementation, the measurement type is determined according to the time information related to the first signaling comprises at least one of the following: when the difference between the third time and the second time is greater than a second threshold, determining the measurement type to be the second measurement type, the second measurement type corresponds to the second measurement parameter; when the difference between the third time and the second time is not greater than the second threshold, determining the measurement type to be the first measurement type, the first measurement type corresponds to the first measurement parameter; when the difference between the third time and the second time is not greater than the second threshold, determining the measurement type to be the third measurement type, the third measurement type corresponds to the third measurement parameter.

In one implementation, the measurement type is determined according to the time information related to the first signaling comprises at least one of the following: when the difference between the third time and the first time is greater than a third threshold, determining the measurement type to be the second measurement type, the second measurement type corresponds to the second measurement parameter; when the difference between the third time and the first time is not greater than the second threshold, determining the measurement type to be the first measurement type, the first measurement type corresponds to the first measurement parameter; when the difference between the third time and the first time is not greater than the second threshold, determining the measurement type to be the third measurement type, the third measurement type corresponds to the third measurement parameter.

In one implementation, the measurement type is determined according to the time information related to the first signaling comprises at least one of the following: when the difference between the fourth time and the second time is greater than a fourth threshold, determining the measurement type to be the second measurement type, the second measurement type corresponds to the second measurement parameter; when the difference between the fourth time and the second time is not greater than the fourth threshold, determining the measurement type to be the first measurement type, the first measurement type corresponds to the first measurement parameter; when the difference between the fourth time and the second time is not greater than the fourth threshold, determining the measurement type to be the third measurement type, the third measurement type corresponds to the third measurement parameter.

In one implementation, the measurement type is determined according to the time information related to the first signaling comprises at least one of the following: when the fourth time is greater than the third time, determining the measurement type to be the second measurement type, the second measurement type corresponds to the second measurement parameter; when the fourth time is not greater than the third time, determining the measurement type to be the first measurement type, the first measurement type corresponds to the first measurement parameter; when the fourth time is not greater than the third time, determining the measurement type to be the third measurement type, the third measurement type corresponds to the third measurement parameter.

In one implementation, the measurement type is determined according to the time information related to the first signaling comprises at least one of the following: when the difference between the third time and the second time is greater than the measurement duration of measuring the measurement resource, determining the measurement type to be the second measurement type, the second measurement type corresponds to the second measurement parameter; when the difference between the third time and the second time is not greater than the measurement duration of measuring the measurement resource, determining the measurement type to be the first measurement type, the first measurement type corresponds to the first measurement parameter; when the difference between the third time and the second time is not greater than the measurement duration of measuring the measurement resource, determining the measurement type to be the third measurement type, the third measurement type corresponds to the third measurement parameter.

In one implementation, the measurement type is determined according to the time information related to the first signaling comprises at least one of the following: determining the measurement type to be the third measurement type, the third measurement type corresponds to an empty set; determining the measurement type to be the first measurement type, the first measurement type corresponds to the first measurement parameter.

In one implementation, the time information comprises at least one of the following: a first time interval, which is used to indicate the time interval between the time for transmitting the reference signal resource and the effective time of the first signaling; a second time interval, which is used to indicate the time interval between the effective time of the first signaling and the time for obtaining the measurement parameter; a third time interval, which is used to indicate the time interval between the effective time of the first signaling and the time for feeding back the measurement parameter; a fourth time interval, which is used to indicate the time interval between the effective time of the first signaling and the time for transmitting the measurement parameter.

In one implementation, the measurement type is determined according to the time information related to the first signaling comprises at least one of the following: when the first time interval is not greater than the first threshold, determining the measurement type to be the second measurement type, the second measurement type corresponds to the second measurement parameter; when the first time interval is greater than the first threshold, determining the measurement type to be the first measurement type, the first measurement type corresponds to the first measurement parameter; when the first time interval is greater than the first threshold, determining the measurement type to be the third measurement type, the third measurement type corresponds to the third measurement parameter.

In one implementation, the measurement type is determined according to the time information related to the first signaling comprises at least one of the following: when the second time interval is greater than the second threshold, determining the measurement type to be the second measurement type, the second measurement type corresponds to the second measurement parameter; when the second time interval is not greater than the second threshold, determining the measurement type to be the first measurement type, the first measurement type corresponds to the first measurement parameter; when the second time interval is not greater than the second threshold, determining the measurement type to be the third measurement type, the third measurement type corresponds to the third measurement parameter.

In one implementation, the measurement type is determined according to the time information related to the first signaling comprises at least one of the following: when the third time interval is greater than the third threshold, determining the measurement type to be the second measurement type, the second measurement type corresponds to the second measurement parameter; when the third time interval is not greater than the third threshold, determining the measurement type to be the first measurement type, the first measurement type corresponds to the first measurement parameter; when the third time interval is not greater than the third threshold, determining the measurement type to be the third measurement type, the third measurement type corresponds to the third measurement parameter.

In one implementation, the measurement type is determined according to the time information related to the first signaling comprises at least one of the following: when the fourth time interval is greater than the fourth threshold, determining the measurement type to be the second measurement type, the second measurement type corresponds to the second measurement parameter; when the fourth time interval is not greater than the fourth threshold, determining the measurement type to be the first measurement type, the first measurement type corresponds to the first measurement parameter; when the fourth time interval is not greater than the fourth threshold, determining the measurement type to be the third measurement type, the third measurement type corresponds to the third measurement parameter.

In one implementation, the measurement type is determined according to the time information related to the first signaling comprises at least one of the following: when the second time interval is less than the fourth time interval, determining the measurement type to be the second measurement type, the second measurement type corresponds to the second measurement parameter; when the second time interval is not less than the fourth time interval, determining the measurement type to be the first measurement type, the first measurement type corresponds to the first measurement parameter; when the second time interval is not less than the fourth time interval, determining the measurement type to be the third measurement type, the third measurement type corresponds to the third measurement parameter.

In one implementation, the measurement type is determined according to the time information related to the first signaling comprises at least one of the following: when the second time interval is less than or equal to the measurement duration of measuring the measurement resource, determining the measurement type to be the second measurement type, the second measurement type corresponds to the second measurement parameter; when the second time interval is greater than the measurement duration of measuring the measurement resource, determining the measurement type to be the first measurement type, the first measurement type corresponds to the first measurement parameter; when the second time interval is greater than the measurement duration of measuring the measurement resource, determining the measurement type to be the third measurement type, the third measurement type corresponds to the third measurement parameter.

In one implementation, the measurement duration of measuring the measurement resource is determined according to Z and offset Δt, where Z is the distance between the last symbol of the transmission resource for transmitting the measurement resource and the first symbol of the transmission resource for feeding back the measurement parameter.

In one implementation, the measurement type is determined according to the time information related to the first signaling comprises at least one of the following: when the second time interval is greater than the first time interval, determining the measurement type to be an empty set.

The feedback device for measuring parameters provided in the embodiment of the present application can implement the various processes implemented in the feedback method embodiment of FIG. 2 or various processes corresponding thereto, and achieve the same technical effect. To avoid repetition, it is not described here. Moreover, this embodiment enables the base station to understand the measurement parameters in the same way as the terminal. In one embodiment, as shown in FIG. 6, the embodiment of the present application further provides a terminal 600, including a processor 601 and a memory 602, wherein the memory 602 stores a program or instruction that can be run on the processor 601. For example, when the communication device 600 is a terminal, the program or instruction is executed by the processor 601 to implement the various steps of the embodiment of the above feedback method for measurement parameters, and can achieve the same technical effect.

The terminal may also include, but is not limited to, at least some of the components including a radio frequency unit, a network module, an audio output unit, an input unit, a sensor, a display unit, a user input unit, an interface unit, a storage, and a processor.

Those skilled in the art can understand that the terminal can also include a power supply (such as a battery) for supplying power to each component, and the power supply can be logically connected to the processor through a power management system, so as to manage charging, discharging, and power consumption management through the power management system. The terminal structure shown in the figures does not constitute a limitation on the terminal, and the terminal may include more or fewer components than shown in the figures, or combine certain components, or arrange components differently, which will not be repeated here.

The embodiment of the present application also provides a readable storage medium, on which a program or instruction is stored. When the program or instruction is executed by the processor, each process of the embodiment of the feedback method for the measurement parameter is implemented, and the same technical effect can be achieved. To avoid repetition, it is not repeated here.

Wherein, the processor is the processor in the terminal described in the above embodiment. The readable storage medium includes a computer-readable storage medium, such as a computer read-only memory ROM, a random access memory RAM, a disk or an optical disk, etc.

FIG. 7 is a schematic diagram of the structure of a reception device for the measurement parameter according to an embodiment of the present application. As shown in FIG. 7, the reception device 700 for the measurement parameter includes: a sending module 710 and a second reception module 720.

The sending module 710 is for sending a first signaling and a measurement resource; the second reception module 720 is for receiving a measurement parameter, wherein the measurement parameter is determined according to the measurement resource and the measurement type, and the measurement type is determined according to the time information related to the first signaling.

In one implementation, the first signaling is used to process one of the following: indicating the measurement type; activating switching of the measurement type; indicating the measurement type and activating the measurement resources; activating switching of the measurement type and the measurement resources; wherein there is a corresponding relationship between the measurement type and the measurement parameter, and the measurement resource comprises at least one reference signal resource.

In one implementation, the measurement type comprises at least two of the following: a first measurement type, which is the measurement type used by a terminal before the first signaling takes effect; a second measurement type, which is the measurement type used by the terminal after the first signaling takes effect; a third measurement type, which is a default measurement type of the terminal.

In one implementation, the measurement parameter is determined according to the measurement resource and the measurement type comprising one of the following: if the measurement type is the first measurement type, obtaining a first measurement parameter according to the first measurement type; if the measurement type is the second measurement type, obtaining a second measurement parameter according to the second measurement type; if the measurement type is the third measurement type, obtaining a third measurement parameter according to the third measurement type.

In one implementation, the first measurement parameter is a second type of precoding information; or the second measurement parameter is the second type of precoding information; or the third measurement parameter is an empty set; or the third measurement parameter is a first type of precoding information.

In one implementation, the priority of the first measurement parameter is lower than the priority of other measurement parameters transmitted on the same transmission resource.

In one implementation, the number of bits corresponding to the third measurement parameter is not greater than the number of bits corresponding to the first measurement parameter; or the number of bits corresponding to the third measurement parameter is not greater than the effective transmission bits of the corresponding transmission resource; or the number of bits corresponding to the second measurement parameter is not greater than the number of bits corresponding to the first measurement parameter.

In one implementation, the time information comprises at least one of the following: a first time, which is the time for transmitting the measurement resource; a second time, which is the effective time of the first signaling; a third time, which is the time for obtaining the measurement parameter; a fourth time, which is the time for transmitting the measurement parameter; wherein, the first time is less than the second time, and the second time is less than the third time and/or the fourth time.

In one implementation, the measurement type is determined according to the time information related to the first signaling comprises at least one of the following: when the difference between the second time and the first time is not greater than a first threshold, determining the measurement type to be the second measurement type, the second measurement type corresponds to the second measurement parameter; when the difference between the second time and the first time is greater than the first threshold, determining the measurement type to be the first measurement type, the first measurement type corresponds to the first measurement parameter; when the difference between the second time and the first time is greater than the first threshold, determining the measurement type to be the third measurement type, the third measurement type corresponds to the third measurement parameter.

In one implementation, the measurement type is determined according to the time information related to the first signaling comprises at least one of the following: when the difference between the third time and the second time is greater than a second threshold, determining the measurement type to be the second measurement type, the second measurement type corresponds to the second measurement parameter; when the difference between the third time and the second time is not greater than the second threshold, determining the measurement type to be the first measurement type, the first measurement type corresponds to the first measurement parameter; when the difference between the third time and the second time is not greater than the second threshold, determining the measurement type to be the third measurement type, the third measurement type corresponds to the third measurement parameter.

In one implementation, the measurement type is determined according to the time information related to the first signaling comprises at least one of the following: when the difference between the third time and the first time is greater than a third threshold, determining the measurement type to be the second measurement type, the second measurement type corresponds to the second measurement parameter; when the difference between the third time and the first time is not greater than the second threshold, determining the measurement type to be the first measurement type, the first measurement type corresponds to the first measurement parameter; when the difference between the third time and the first time is not greater than the second threshold, determining the measurement type to be the third measurement type, the third measurement type corresponds to the third measurement parameter.

In one implementation, the measurement type is determined according to the time information related to the first signaling comprises at least one of the following: when the difference between the fourth time and the second time is greater than a fourth threshold, determining the measurement type to be the second measurement type, the second measurement type corresponds to the second measurement parameter; when the difference between the fourth time and the second time is not greater than the fourth threshold, determining the measurement type to be the first measurement type, the first measurement type corresponds to the first measurement parameter; when the difference between the fourth time and the second time is not greater than the fourth threshold, determining the measurement type to be the third measurement type, the third measurement type corresponds to the third measurement parameter.

In one implementation, the measurement type is determined according to the time information related to the first signaling comprises at least one of the following: when the fourth time is greater than the third time, determining the measurement type to be the second measurement type, the second measurement type corresponds to the second measurement parameter; when the fourth time is not greater than the third time, determining the measurement type to be the first measurement type, the first measurement type corresponds to the first measurement parameter; when the fourth time is not greater than the third time, determining the measurement type to be the third measurement type, the third measurement type corresponds to the third measurement parameter.

In one implementation, the measurement type is determined according to the time information related to the first signaling comprises at least one of the following: when the difference between the third time and the second time is greater than the measurement duration of measuring the measurement resource, determining the measurement type to be the second measurement type, the second measurement type corresponds to the second measurement parameter; when the difference between the third time and the second time is not greater than the measurement duration of measuring the measurement resource, determining the measurement type to be the first measurement type, the first measurement type corresponds to the first measurement parameter; when the difference between the third time and the second time is not greater than the measurement duration of measuring the measurement resource, determining the measurement type to be the third measurement type, the third measurement type corresponds to the third measurement parameter.

In one implementation, the measurement type is determined according to the time information related to the first signaling comprises at least one of the following: determining the measurement type to be the third measurement type, the third measurement type may corresponds to an empty set; determining the measurement type to be the first measurement type, the first measurement type corresponds to the first measurement parameter.

In one implementation, the time information comprises at least one of the following: a first time interval, which is used to indicate the time interval between the time for transmitting the reference signal resource and the effective time of the first signaling; a second time interval, which is used to indicate the time interval between the effective time of the first signaling and the time for obtaining the measurement parameter; a third time interval, which is used to indicate the time interval between the effective time of the first signaling and the time for feeding back the measurement parameter; a fourth time interval, which is used to indicate the time interval between the effective time of the first signaling and the time for transmitting the measurement parameter.

In one implementation, the measurement type is determined according to the time information related to the first signaling comprises at least one of the following: when the first time interval is not greater than the first threshold, determining the measurement type to be the second measurement type, the second measurement type corresponds to the second measurement parameter; when the first time interval is greater than the first threshold, determining the measurement type to be the first measurement type, the first measurement type corresponds to the first measurement parameter; when the first time interval is greater than the first threshold, determining the measurement type to be the third measurement type, the third measurement type corresponds to the third measurement parameter.

In one implementation, the measurement type is determined according to the time information related to the first signaling comprises at least one of the following: when the second time interval is greater than the second threshold, determining the measurement type to be the second measurement type, the second measurement type corresponds to the second measurement parameter; when the second time interval is not greater than the second threshold, determining the measurement type to be the first measurement type, the first measurement type corresponds to the first measurement parameter; when the second time interval is not greater than the second threshold, determining the measurement type to be the third measurement type, the third measurement type corresponds to the third measurement parameter.

In one implementation, the measurement type is determined according to the time information related to the first signaling comprises at least one of the following: when the third time interval is greater than the third threshold, determining the measurement type to be the second measurement type, the second measurement type corresponds to the second measurement parameter; when the third time interval is not greater than the third threshold, determining the measurement type to be the first measurement type, the first measurement type corresponds to the first measurement parameter; when the third time interval is not greater than the third threshold, determining the measurement type to be the third measurement type, the third measurement type corresponds to the third measurement parameter.

In one implementation, the measurement type is determined according to the time information related to the first signaling comprises at least one of the following: when the fourth time interval is greater than the fourth threshold, determining the measurement type to be the second measurement type, the second measurement type corresponds to the second measurement parameter; when the fourth time interval is not greater than the fourth threshold, determining the measurement type to be the first measurement type, the first measurement type corresponds to the first measurement parameter; when the fourth time interval is not greater than the fourth threshold, determining the measurement type to be the third measurement type, the third measurement type corresponds to the third measurement parameter.

In one implementation, the measurement type is determined according to the time information related to the first signaling comprises at least one of the following: when the second time interval is less than the fourth time interval, determining the measurement type to be the second measurement type, the second measurement type corresponds to the second measurement parameter; when the second time interval is not less than the fourth time interval, determining the measurement type to be the first measurement type, the first measurement type corresponds to the first measurement parameter; when the second time interval is not less than the fourth time interval, determining the measurement type to be the third measurement type, the third measurement type corresponds to the third measurement parameter.

In one implementation, the measurement type is determined according to the time information related to the first signaling comprises at least one of the following: when the second time interval is less than or equal to the measurement duration of measuring the measurement resource, determining the measurement type to be the second measurement type, the second measurement type corresponds to the second measurement parameter; when the second time interval is greater than the measurement duration of measuring the measurement resource, determining the measurement type to be the first measurement type, the first measurement type corresponds to the first measurement parameter; when the second time interval is greater than the measurement duration of measuring the measurement resource, determining the measurement type to be the third measurement type, the third measurement type corresponds to the third measurement parameter.

In one implementation, the measurement duration of measuring the measurement resource is determined according to Z and offset Δt, where Z is the distance between the last symbol of the transmission resource for transmitting the measurement resource and the first symbol of the transmission resource for feeding back the measurement parameter.

In one implementation, the measurement type is determined according to the time information related to the first signaling comprises at least one of the following: when the second time interval is greater than the first time interval, determining the measurement type to be an empty set.

The feedback device for measurement parameters provided in the embodiment of the present application can implement the various processes implemented by the embodiment of feedback method of FIG. 2 or the various processes corresponding thereto, and achieve the same or corresponding technical effects, and will not be described here to avoid repetition. In addition, this embodiment enables the base station to have the same understanding of the measurement parameters as the terminal.

This network side device embodiment corresponds to the above-mentioned network side device method embodiment. Each implementation process and implementation method of the above-mentioned method embodiment can be applied to this network side device embodiment and can achieve the same technical effect.

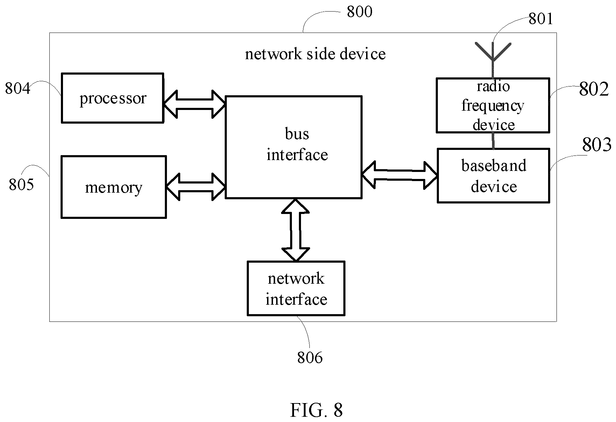

In one embodiment, the embodiment of the present application also provides a network side device. As shown in FIG. 8, the network side device 800 includes: an antenna 801, a radio frequency device 802, a baseband device 803, a processor 804 and a memory 805. The antenna 801 is connected to the radio frequency device 802. **In** the uplink direction, the radio frequency device 802 receives information through the antenna 801 and sends the received information to the baseband device 803 for processing. **In** the downlink direction, the baseband device 803 processes the information to be sent and sends it to the radio frequency device 802, and the radio frequency device 802 processes the received information and sends it out through the antenna 801.

The method executed by the network side device in the above embodiment can be implemented in the baseband device 803, and the baseband device 803 includes a baseband processor.

The baseband device 803 may include, for example, at least one baseband board, on which a plurality of chips are arranged, as shown in FIG. 8, one of which is, for example, a baseband processor, connected to the memory 805 through a bus interface to call the program in the memory 805 and perform the network device operation shown in the above method embodiment.

The network side device may also include a network interface 806, which is, for example, a common public radio interface (CPRI).

In one implementation, the network side device 800 of the embodiment of the present application further includes: instructions or programs stored in the memory 805 and executable on the processor 804, the processor 804 calls the instructions or programs in the memory 805 to execute the method executed by each module shown in FIG. 7, and achieves the same technical effect, to avoid repetition, it is not described here. The embodiment of the present application further provides a chip, the chip includes a processor and a communication interface, the communication interface is coupled to the processor, the processor is used to run a program or instruction, implement the various processes of the above-mentioned embodiment of feedback method for measurement parameter, and can achieve the same technical effect, to avoid repetition, it is not described here.

It should be understood that the chip mentioned in the embodiment of the present application can also be called a system-level chip, a system chip, a chip system or a system-on-chip chip, etc.

The embodiment of the present application further provides a computer program/program product, which is stored in a storage medium, and is executed by at least one processor to implement the various processes of the above-mentioned embodiment of the feedback method for measurement parameters, and can achieve the same technical effect. To avoid repetition, it will not be repeated here.

The embodiment of the present application further provides a feedback system for measurement parameter, including: a terminal and a network side device, wherein the terminal can be used to execute the steps of the feedback method for measurement parameter described in FIG. 2 above, and the network side device can be used to execute the steps of the feedback method for measurement parameter described in FIG. 5 above.

It should also be noted that the terms "include", "comprise" and/or any other variations thereof are intended to encompass a non-exclusive inclusion, such that a process, method, article and/or device comprising a series of elements includes not only those elements, but also other elements not expressly listed or inherent to such a process, method, article and/or device. Without further limitation, an element defined by the phrase "comprise a..." does not preclude the presence of additional identical elements in the process, method, article and/or device that includes the element. In addition, it should be noted that the scope of the feedback method and device in the embodiments of the present application is not limited to performing functions in the order shown or discussed, and may also include performing functions in a substantially simultaneous manner or in a reverse order according to the functions involved. For example, the described feedback method may be performed in an order different from that described, and various steps may be added, omitted, or combined. In addition, features described with reference to certain examples may be combined in other examples.

Through the description of the above implementation, those skilled in the art can clearly understand that the above-mentioned embodiment method can be implemented by means of software plus the necessary general hardware platform, and of course by hardware, but in many cases the former is a better implementation. Based on this understanding, the technical solution of the present application is essentially or the part that contributes to the prior art can be embodied in the form of a computer software product, which is stored in a storage medium (such as ROM/RAM, disk, CD), including several instructions to enable a terminal (which can be a mobile phone, computer, server, air conditioner, or network equipment, etc.) to execute the feedback method described in each embodiment of the present application.

The embodiments of the present application are described above in conjunction with the accompanying drawings, but the present application is not limited to the above-mentioned specific implementations. The above-mentioned specific implementations are merely illustrative and not restrictive. Under the guidance of the present application, those skilled in the art can also make many forms without departing from the purpose of the present application and the scope of protection of the claims, all of which are within the protection of the present application.

## Claims

1. A feedback method for measurement parameter, wherein the feedback method comprises:
receiving a first signaling and a measurement resource;
determining a measurement type according to time information related to the first signaling;
determining a measurement parameter according to the measurement resource and the measurement type;
feeding back the measurement parameter.

2. The feedback method of claim 1, wherein the first signaling is used to process one of the following:
indicating the measurement type;
activating switching of the measurement type;
indicating the measurement type and activating the measurement resource;
activating switching of the measurement type and the measurement resource;
wherein there is a corresponding relationship between the measurement type and the measurement parameter, and the measurement resource comprises at least one reference signal resource.

3. The feedback method of claim 1, wherein the measurement type comprises at least two of the following:
a first measurement type, which is a measurement type used by a terminal before the first signaling takes effect;
a second measurement type, which is a measurement type used by the terminal after the first signaling takes effect;
a third measurement type, which is a default measurement type of the terminal.

4. The feedback method of claim 1, wherein determining the measurement parameter according to the measurement resource and the measurement type comprises one of the following:
for the measurement type being the first measurement type, obtaining a first measurement parameter according to the first measurement type;
for the measurement type being the second measurement type, obtaining a second measurement parameter according to the second measurement type;
for the measurement type being the third measurement type, obtaining a third measurement parameter according to the third measurement type.

5. The feedback method of claim 4, wherein,
the first measurement parameter is a second type of precoding information; or
the second measurement parameter is the second type of precoding information; or
the third measurement parameter is an empty set; or the third measurement parameter is a first type of precoding information.

6. The feedback method of claim 4, wherein the priority of the first measurement parameter is lower than the priority of other measurement parameters transmitted on the same transmission resource.

7. The feedback method of claim 4, wherein,
the number of bits corresponding to the third measurement parameter is not greater than the number of bits corresponding to the first measurement parameter; or
the number of bits corresponding to the third measurement parameter is not greater than the effective transmission bits of the corresponding transmission resource; or
the number of bits corresponding to the second measurement parameter is not greater than the number of bits corresponding to the first measurement parameter.

8. The feedback method of claim 1, wherein the time information comprises at least one of the following:
a first time, which is the time for transmitting the measurement resource;
a second time, which is the effective time of the first signaling;
a third time, which is the time for obtaining the measurement parameter;
a fourth time, which is the time for transmitting the measurement parameter;
wherein the first time is less than the second time, and the second time is less than the third time and/or the fourth time.

9. The feedback method of claim 8, wherein determining the measurement type according to the time information related to the first signaling comprises at least one of the following:
in response to that the difference between the second time and the first time is not greater than a first threshold, determining the measurement type to be the second measurement type;
in response to that the difference between the second time and the first time is greater than the first threshold, determining the measurement type to be the first measurement type;
in response to that the difference between the second time and the first time is greater than the first threshold, determining the measurement type to be the third measurement type.

10. The feedback method of claim 8, wherein determining the measurement type according to the time information related to the first signaling comprises at least one of the following:
in response to that the difference between the third time and the second time is greater than a second threshold, determining the measurement type to be the second measurement type;
in response to that the difference between the third time and the second time is not greater than the second threshold, determining the measurement type to be the first measurement type;
in response to that the difference between the third time and the second time is not greater than the second threshold, determining the measurement type to be the third measurement type.

11. The feedback method of claim 8, wherein determining the measurement type according to the time information related to the first signaling comprises at least one of the following:
in response to that the difference between the third time and the first time is greater than a third threshold, determining the measurement type to be the second measurement type;
in response to that the difference between the third time and the first time is not greater than the second threshold, determining the measurement type to be the first measurement type;
in response to that the difference between the third time and the first time is not greater than the second threshold, determining the measurement type to be the third measurement type.

12. The feedback method of claim 8, wherein determining the measurement type according to the time information related to the first signaling comprises at least one of the following:
in response to that the difference between the fourth time and the second time is greater than a fourth threshold, determining the measurement type to be the second measurement type;
in response to that the difference between the fourth time and the second time is not greater than the fourth threshold, determining the measurement type to be the first measurement type;
in response to that the difference between the fourth time and the second time is not greater than the fourth threshold, determining the measurement type to be the third measurement type.

13. The feedback method of claim 8, wherein determining the measurement type according to the time information related to the first signaling comprises at least one of the following:
in response to that the fourth time is greater than the third time, determining the measurement type to be the second measurement type;
in response to that the fourth time is not greater than the third time, determining the measurement type to be the first measurement type;
in response to that the fourth time is not greater than the third time, determining the measurement type to be the third measurement type.

14. The feedback method of claim 8, wherein determining the measurement type according to the time information related to the first signaling comprises at least one of the following:
in response to that the difference between the third time and the second time is greater than a measurement duration of measuring the measurement resource, determining the measurement type to be the second measurement type;
in response to that the difference between the third time and the second time is not greater than a measurement duration of measuring the measurement resource, determining the measurement type to be the first measurement type;
in response to that the difference between the third time and the second time is not greater than a measurement duration of measuring the measurement resource, determining the measurement type to be the third measurement type.

15. The feedback method of claim 1, wherein the time information comprises at least one of the following:
a first time interval, which is used to indicate the time interval between the time for transmitting the reference signal resource and the effective time of the first signaling;
a second time interval, which is used to indicate the time interval between the effective time of the first signaling and the time for obtaining the measurement parameter;
a third time interval, which is used to indicate the time interval between the time for transmitting the reference signal resource and the time for feeding back the measurement parameter;
a fourth time interval, which is used to indicate the time interval between the effective time of the first signaling and the time for transmitting the measurement parameter.

16. The feedback method of claim 15, wherein determining the measurement type according to the time information related to the first signaling comprises at least one of the following:
in response to that the first time interval is not greater than the first threshold, determining the measurement type to be the second measurement type;
in response to that the first time interval is greater than the first threshold, determining the measurement type to be the first measurement type;
in response to that the first time interval is greater than the first threshold, determining the measurement type to be the third measurement type.

17. The feedback method of claim 15, wherein determining the measurement type according to the time information related to the first signaling comprises at least one of the following:
in response to that the second time interval is greater than the second threshold, determining the measurement type to be the second measurement type;
in response to that the second time interval is not greater than the second threshold, determining the measurement type to be the first measurement type;
in response to that the second time interval is not greater than the second threshold, determining the measurement type to be the third measurement type.

18. The feedback method of claim 15, wherein determining the measurement type according to the time information related to the first signaling comprises at least one of the following:
in response to that the third time interval is greater than the third threshold, determining the measurement type to be the second measurement type;
in response to that the third time interval is not greater than the third threshold, determining the measurement type to be the first measurement type;
in response to that the third time interval is not greater than the third threshold, determining the measurement type to be the third measurement type.

19. The feedback method of claim 15, wherein determining the measurement type according to the time information related to the first signaling comprises at least one of the following:
in response to that the fourth time interval is greater than the fourth threshold, determining the measurement type to be the second measurement type;
in response to that the fourth time interval is not greater than the fourth threshold, determining the measurement type to be the first measurement type;
in response to that the fourth time interval is not greater than the fourth threshold, determining the measurement type to be the third measurement type.

20. The feedback method of claim 15, wherein determining the measurement type according to the time information related to the first signaling comprises at least one of the following:
in response to that the second time interval is less than the fourth time interval, determining the measurement type to be the second measurement type;
in response to that the second time interval is not less than the fourth time interval, determining the measurement type to be the first measurement type;
in response to that the second time interval is not less than the fourth time interval, determining the measurement type to be the third measurement type.

21. The feedback method of claim 15, wherein determining the measurement type according to the time information related to the first signaling comprises at least one of the following:
in response to that the second time interval is less than or equal to a measurement duration of measuring the measurement resource, determining the measurement type to be the second measurement type;
in response to that the second time interval is greater than a measurement duration of measuring the measurement resource, determining the measurement type to be the first measurement type;
in response to that the second time interval is greater than a measurement duration of measuring the measurement resource, determining the measurement type to be the third measurement type.

22. The feedback method of claim 13 or 21, wherein the measurement duration of measuring the measurement resource is determined according to Z and an offset Δt, where Z is the distance between the last symbol of the transmission resource for transmitting the measurement resource and the first symbol of the transmission resource for feeding back the measurement parameter.

23. A reception method for measurement parameter, wherein the reception method comprises:
sending a first signaling and a measurement resource;
receiving a measurement parameter, wherein the measurement parameter is determined according to the measurement resource and a measurement type, and the measurement type is determined according to time information related to the first signaling.

24. A terminal, comprising a processor and a memory, wherein the memory stores a program or instruction that can be run on the processor, and when executed by the processor, causing the processor to implement the steps of the feedback method for measurement parameter recited in any one of claims 1 to 22.

25. A network device, comprising a processor and a memory, wherein the memory stores a program or instruction that can be run on the processor, and when executed by the processor, causing the processor to implement the steps of the reception method for measurement parameter recited in claim 23.

26. A readable storage medium, wherein the readable storage medium stores a program or instruction, and when executed by the processor, causing the processor to implement the steps of the feedback method for measurement parameter recited in any one of claims 1 to 22; or
to implement the steps of the reception method for measurement parameter recited in claim 23.
